Europäisches Patentamt

European Patent Office

Office européen des brevets

(11) Veröffentlichungsnummer: **0 504 790 B1**

# EUROPÄISCHE PATENTSCHRIFT

(45) Veröffentlichungstag der Patentschrift: **05.07.95**

(51) Int. Cl.6: **C03C 17/34**

(21) Anmeldenummer: **92104563.9**

(22) Anmeldetag: **17.03.92**

(54) **Fassadenplatte mit niedriger Lichtreflexion, Verfahren zu ihrer Herstellung sowie ihre Verwendung.**

(30) Priorität: **18.03.91 DE 4108616**

(43) Veröffentlichungstag der Anmeldung:
**23.09.92 Patentblatt 92/39**

(45) Bekanntmachung des Hinweises auf die
Patenterteilung:
**05.07.95 Patentblatt 95/27**

(84) Benannte Vertragsstaaten:
**AT BE CH DE DK ES FR GB GR IT LI LU MC
NL PT SE**

(56) Entgegenhaltungen:
**EP-A- 0 334 991
EP-A- 0 363 747
CH-A- 558 763
DE-A- 2 334 875**

(73) Patentinhaber: **FLACHGLAS AKTIENGESELL-
SCHAFT
Siemensstrasse 1-3
D-90766 Fürth (DE)**

(72) Erfinder: **Nöthe, Axel, Dr. Dipl.-Phys.
Ringstrasse 49
W-4620 Castrop-Rauxel (DE)**

## Beschreibung

Die Erfindung betrifft eine Fassadenplatte, insbesondere zum Verkleiden der Fassade zwischen mit Glasscheiben ausgestatteten Fensteröffnungen eines Gebäudes, mit einem transparenten Glasträger, der auf seiner Rückseite eine die Außenansicht der Fassadenplatte hinsichtlich Lichtreflexionsgrad und Farbton an diejenige der Glasscheiben im Fensterbereich anpassende Beschichtung mit einer Metalloxidschicht mit einem Brechungsindex zwischen 1.8 und 2.5 sowie einer Dicke von 0 - 150 nm und darauf einer optisch dichten, gerichtet reflektierenden, metallischen Abdunkelungsschicht, die überwiegend aus Metallen der Gruppe Chrom, Titan, Nickel sowie deren Legierungen besteht, aufweist.

Rückseite meint in diesem Zusammenhang diejenige Glasoberfläche, die nach dem Einbau dem Gebäudeinneren zugewandt ist; als optisch dicht werden solche Schichten bezeichnet, deren Lichtdurchlässigkeit bei senkrechtem Lichteinfall deutlich weniger als 10 %, insbesondere weniger als 5 %, beträgt. Der Glasträger besteht üblicherweise aus nach dem Floatverfahren hergestelltem Natron-Kalk-Silikatglas.

Bei der Gestaltung der Fassade von Gebäuden besteht in vielen Fällen das Bedürfnis, im lichtundurchlässigen Fassadenbereich (Brüstungsbereich), also zwischen den Fensteröffnungen, als Außenelemente Fassadenplatten einzusetzen, welche in Helligkeit und Farbe der Außenansicht beispielsweise durch geeignete Beschichtungen harmonisch auf den Fensterbereich abgestimmt sind. Meistens wird dabei eine weitgehende Übereinstimmung zwischen dem Fenster- und dem Brüstungsbereich angestrebt, um auf diese Weise eine Glasfassade mit zumindest bereichsweise einheitlichem Aussehen zu erhalten.

Im Fensterbereich werden dabei Einfach- oder Mehrfachscheiben unter Verwendung von normalen oder auch in der Masse eingefärbten Glasscheiben eingesetzt. Zum anderen werden häufig auch beschichtete Glasscheiben verwendet, um beispielsweise die Sonnenschutzwirkung zu verbessern. Als Sonnenschutzbeschichtung eignen sich dünne halbtransparente Metallschichten, insbesondere aus Gold und Silber, welche üblicherweise mit zusätzlichen Interferenzschichten zu einem Mehrschichtsystem kombiniert werden. Mit solchen Mehrschichtsystemen ist es möglich, sehr gute Sonnenschutzeigenschaften zu erhalten und gleichzeitig in der Außenansicht die Spiegelwirkung solcher beschichteter Glasscheiben zu reduzieren.

In vielen Anwendungsfällen ist es nämlich erwünscht, daß die Lichtreflexion nach außen nicht zu hoch ist, um eine unerwünschte Blendung auszuschalten. Das gilt z. B. für Innenstädte mit hoher Bebauungsdichte, wobei meistens, um den Altstadtcharakter nicht zu stören, auch intensive Färbungen für diese Scheiben unerwünscht sind. Um Blendung weitgehend auszuschalten, sollte die Lichtreflexion im allgemeinen Werte von etwa 25 % nicht überschreiten. Diese Forderung wird von üblichem Isolierglas erfüllt. So beträgt die Lichtreflexion einer Einfachscheibe aus klarem Glas etwa 8 %, einer Zweifachscheibe aus klarem Glas etwa 14 bis 15 %, die einer Dreifachscheibe etwa 20%. Bei Verwendung von in der Masse eingefärbten Gläsern sind die entsprechenden Werte niedriger.

Wegen ihrer Kratzempfindlichkeit und der Gefahr von Schichtveränderungen durch die Einwirkung der Außenatmosphäre werden derartige Beschichtungen im allgemeinen innerhalb von hermetisch abgeschlossenen Isolierglasscheiben angeordnet. Einzelscheiben mit auf der Rückseite angebrachter Beschichtung können nur dann verwendet werden, wenn für die Beschichtung relativ harte und chemisch beständige Materialien eingesetzt werden.

Um eine Anpassung des lichtundurchlässigen Brüstungsbereich an den Fensterbereich zu erhalten, ist es bereits bekannt, als Fassadenelemente Isolierglasscheiben gleichen Aufbaus wie im Fensterbereich einzusetzen, wobei jedoch zusätzlich auf die dem Gebäudeinneren zugewandte Scheibe eine optisch dichte Email- oder Farb-Abdunkelungsschicht aufgebracht wird, um den störenden Durchblick auf hinter dem betreffenden Fassadenelement liegende Wandbereiche zu verhindern. Derartige Lösungen sind im Hinblick auf eine optisch einheitliche Glasfassade voll befriedigend. Allerdings sind die Kosten sehr hoch, weil auch im Brüstungsbereich Isolierglas eingesetzt werden muß.

Hinzu kommen wegen des hohen Absorptionsgrades für Sonnenstrahlung der zusätzlichen lichtundurchlässigen Beschichtung beträchtliche unerwünschte Erwärmungseffekte derartiger Fassadenelemente. Diese sind bei der Verwendung von Isolierglas aus zwei klaren Glasscheiben so hoch, daß bei nicht hinterlüfteten Fassadenplatten Temperaturen oberhalb von 80 °C auftreten können, welche die Belastungsfähigkeit des Randverbundes übersteigen und damit zur Zerstörung der Isolierglasscheibe führen. Aber auch bei Isolierglasscheiben, bei denen die äußere Scheibe eine Sonnenschutzwirkung zeigt und dadurch die auf die rückseitige Scheibe auftreffende Sonnenstrahlung reduziert, ergibt sich eine beträchtliche zusätzliche Belastung, welche die Lebensdauer des Isolierglases beeinträchtigt. Weitere Kosten entstehen bei derartigen Fassadenplatten dadurch, daß zur Vermeidung von Glasbruch bei ungleichmäßiger thermischer Belastung chemisch oder thermisch vorgespanntes Glas verwendet werden muß.

Es ist ferner bereits bekannt, für den lichtundurchlässigen Fassadenbereich monolithische Glasscheiben einzusetzen, die auf ihrer Vorderseite eine hochbrechende Metalloxidschicht, z. B. aus Titandioxid, als farbgebende Interferenzschicht aufweisen (vgl. DE-A-26 46 513). Bei derartigen Fassadenplatten ist die dem Gebäudeinneren zugewandte Rückseite mit einer optisch dichten Email- oder Lack-Abdunkelungsschicht versehen. Ein großer Nachteil derartiger monolithischer Fassadenplatten mit außenliegender Beschichtung besteht darin, daß die Reinigung ihrer Außenseite mit einem erheblichen Aufwand verbunden ist. Festhaftende Verschmutzungen sind sehr schwierig zu entfernen, da in solchen Fällen mechanische Reinigungsverfahren, wie sie für unbeschichtetes Glas üblich sind, nicht angewendet werden können, weil dies zu Verkratzungen der Metalloxidschicht führen würde. Hinzu kommt, daß diese Oxid-Interferenzschichten mit einem Lichtreflexionsgrad oberhalb von 30 % zu hoch reflektieren, um eine optische Anpassung des Brüstungsbereichs an den mit niedrig reflektierenden Glasscheiben ausgestatteten Fensterbereich durchführen zu können.

Aus der US-A-39 51 525 ist eine Glas-Fassadenplatte vorbekannt, die auf ihrer Rückseite mit einer reflektierenden, farbgebenden, hochbrechenden Metalloxidschicht versehen ist. Um eine optische Anpassung von Fenster- und Brüstungsbereich zu erhalten, wird in beiden Bereichen die gleiche Beschichtung verwendet, wobei Material und Dicke der Metalloxidschicht so gewählt sind, daß im Fensterbereich eine Sonnenschutzwirkung auftritt.

Die Fassadenplatte weist im Unterschied zu den im Fensterbereich eingesetzten Glasscheiben auf der Metalloxidschicht zusätzlich eine optisch dichte Abdunkelungsschicht aus eingebranntem Email auf. Weil die Anordnung einer Emailschicht unmittelbar auf der farbgebenden Metalloxidschicht aber zur Folge hat, daß die Farbanpassung an die im Fensterbereich verwendeten Glasscheiben mit an Luft angrenzender Metalloxidschicht verschlechtert wird, soll nach der US-PS 39 51 525 eine Kompensation zumindestens teilweise dadurch erreicht werden, daß die Farbe und das Material der Emailschicht geeignet ausgewählt werden. Dieses Vorgehen kann hinsichtlich der optischen Anpassung des Brüstungs- an den Fensterbereich nicht voll befriedigen. Im Unterschied zur Metalloxidschicht reflektieren Emailschichten diffus. Dadurch hängt der Grad der erreichten Anpassung stark von der sich örtlich und zeitlich ändernden spektralen Zusammensetzung der einfallenden Sonnenstrahlung ab.

Es ist weiterhin bekannt, im lichtundurchlässigen Fassadenbereich Glasscheiben zu verwenden, die rückseitig wie die Glasscheiben im Fensterbereich eine lichtdurchlässige Beschichtung z. B. aus einem Metalloxid tragen, die zusätzlich aber mit einer optisch dichten Abdunkelungsschicht aus einem Lack oder einer eingefärbten Folie versehen sind. Wegen der unterschiedlichen Reflexionswerte an den Grenzflächen Metalloxid/Luft im Fensterbereich und Metalloxid/Abdunkelungsschicht im Brüstungsbereich ergibt sich wie bei der Verwendung eines Emails als Abdunkelungsschicht eine unbefriedigende Anpassung hinsichtlich Farbton und Lichtreflexionsgrad. Außerdem sind diese organischen Abdunkelungsschichten der Einwirkung von Licht und UV-Strahlung durch die Glasscheibe und die Metalloxidschicht hindurch ausgesetzt, was zu Alterungsproblemen und Ablösungserscheinungen führen kann. Hinzu kommt, daß das Aufbringen einer zusätzlichen Abdunkelungsschicht auf die in der Regel pyrolytisch oder mittels eines physikalischen Beschichtungsverfahrens aufgebrachte Metalloxidschicht kostenträchtig ist.

Die beschriebenen Fassadenplatten sind insbesondere dann nicht für den Einbau im Brüstungsbereich geeignet, wenn im Fensterbereich eine Verglasung aus Klarglas, in der Masse eingefärbtem Glas oder niedrig reflektierend beschichteten Sonnenschutz-Glasscheiben eingesetzt wird. Das menschliche Auge ist nämlich in der Lage, bei einem unmittelbaren Vergleich nebeneinander eingebauter Glasscheiben auch äußerst geringfügige Unterschiede in der Außenansicht wahrzunehmen. Das führt dann zu einem unerwünscht uneinheitlichen Gesamtbild einer entsprechend ausgestatteten Glasfassade.

Aus der EP-A-04 04 282 der Anmelderin ist bereits eine gattungsgemäße Fassadenplatte aus einer rückseitig beschichteten Einzelglasscheibe bekannt. Die Beschichtung besteht aus einer glasseitigen Metalloxidschicht mit einem Brechungsindex zwischen 1.8 und 2.4 und einer optischen Dicke zwischen 60 und 160 nm sowie auf dieser Metalloxidschicht einer optisch dichten, gerichtet reflektierenden Abdunkelungsschicht aus einem in sauerstofffreier Atmosphäre aufgebrachten Metall oder einer Metallegierung aus der Gruppe Chrom, Titan, Nickel, insbesondere Chrom-Nickel-Legierungen oder Edelstahl. Diese Fassadenplatte hat sich für die Anwendung bei Fassaden, die im Fensterbereich mit relativ hoch reflektierenden Glasscheiben ausgestattet sind, bewährt.

Fassadenplatten nach der EP-A-04 04 282 verfügen über einen Lichtreflexionsgrad von etwa 30 - 50 % und sind daher für den oben geschilderten Einsatzfall, nämlich zur Anpassung an niedrig reflektierende Glasscheiben im Fensterbereich, nicht verwendbar. Änderungen des Lichtreflexionsgrads bei gleichbleibendem Farbton sind bei der Herstellung der gattungsgemäßen Fassadenplatte nur durch Austausch des für die Abdunkelungsschicht verwendeten Materials möglich und damit verfahrensmäßig relativ aufwendig.

Der Erfindung liegt dementsprechend die Aufgabe zugrunde, eine als Einzelscheibe verwendbare Fassadenplatte der eingangs genannten Art zu schaffen, welche bei Betrachtung von der Vorderseite einen Lichtreflexionsgrad im Bereich von nur etwa 8 - 25 % hat und einen störenden Durchblick auf hinter der Fassadenplatte liegende Wandbereiche verhindert, wobei eine sehr gute Anpassung hinsichtlich Lichtreflexionsgrad und Farbton an die im Fensterbereich eingesetzten Glasscheiben mit entsprechend niedrigem Lichtreflexionsgrad sowie mäßig intensivem Farbton erzielbar sein soll. Die Fassadenplatte soll kostengünstig herstellbar sein, wobei Änderungen des Farbtons und des Lichtreflexionsgrads ohne großen Aufwand, insbesondere ohne Austausch der eingesetzten Schichtmaterialien, und ohne nennenswerte Einbußen bei der Alterungsbeständigkeit der Fassadenplatte möglich sein sollen.

Erfindungsgemäß wird diese Aufgabe in Weiterbildung der gattungsgemäßen Fassadenplatte dadurch gelöst, daß die metallische Abdunkelungsschicht zur Reduzierung ihres Lichtreflexionsgrades mit einem Zusatz eines Nichtmetalls in einer solchen Menge versehen ist, daß der Lichtreflexionsgrad der durch ausreichende Dicke noch optisch dichten Abdunkelungsschicht bei senkrechtem Lichteinfall, von der Vorderseite der Glasscheibe und ohne dazwischenliegende Metalloxidschicht gemessen, zwischen 10 % und 35 % beträgt.

Vorteilhafte Weiterbildungen der Erfindung sind ebenso wie ein Verfahren zur Herstellung erfindungsgemäßer Fassadenplatten sowie ihre Verwendung Gegenstand der Unteransprüche.

Durch das Zusammenwirken der erfindungsgemäßen Maßnahmen gelingt es auf überraschend einfache und äußerst wirtschaftliche Weise, den Fassadenplatten die gewünschten optischen Eigenschaften zu verleihen, ohne daß die ausgezeichnete Beständigkeit der rückseitig beschichteten Glasscheibe gegenüber Umwelteinflüssen nennenswert beeinträchtigt wird.

Wesentlich für die Erfindung ist der genau dosierte Zusatz des Nichtmetalls, insbesondere von Sauerstoff, zu dem Metall oder der Metallegierung der Abdunkelungsschicht, der so zu bemessen ist, daß die Schicht einerseits noch ihren metallischen Charakter bewahrt und andererseits der Lichtreflexionsgrad der Abdunkelungsschicht in ausreichendem Maße abgesenkt wird. Ein Maß hierfür stellt der Imaginärteil $k$ des komplexen Brechungsindex $n - i \cdot k$ der Abdunkelungsschicht dar. Dieser liegt für Chrom beispielsweise bei 4.0. Erfindungsgemäß wird $k$ durch den Zusatz des Nichtmetalls um 25 - 75 % gegenüber dem reinen Metall oder der reinen Metallegierung der Abdunkelungsschicht abgesenkt, maximal aber auf etwa 1.0.

Im Falle des Sauerstoffzusatzes beispielsweise liegt der Sauerstoffanteil der erfindungsgemäßen Abdunkelungsschicht deutlich unter dem Sättigungsgehalt des voll oxidierten Metalls; er beträgt typischerweise weniger als 30 %, insbesondere weniger als 20 % des Sauerstoffgehalts der voll oxidierten Schicht. Beispielsweise liegt er im Falle von Cr (Oxid = $Cr_2O_3$, Sauerstoffgehalt 60 %) unter 18 %, insbesondere unter 12 %.

Die Erfindung erlaubt es, ausgehend von lediglich je einem Ausgangsmaterial für die Metalloxid- und für die Abdunkelungsschicht Farbton und Lichtreflexionsgrad der Fassadenplatte praktisch unabhängig voneinander zu variieren. Zur Anpassung des Farbtons an die geforderten Werte braucht bei gegebenem Material und Reflexionsgrad der Abdunkelungsschicht lediglich die Dicke der Metalloxidschicht verändert zu werden, während der Lichtreflexionsgrad der Fassadenplatte innerhalb des Bereichs von etwa 8 - 25 % durch Veränderung des Nichtmetallzusatzes, insbesondere des Sauerstoffanteils, der Abdunkelungsschicht eingestellt wird.

Fassadenplatten nach der Erfindung lassen sich in ganz besonders vorteilhafter Weise dadurch herstellen, daß die Schichten im Vakuum mittels Magnetron-Kathodenzerstäubung aufgebracht werden. Dieses Verfahren ermöglicht bei dem Einsatz von Durchlaufanlagen besonders wirtschaftlich die Beschichtung großer Glasflächen. Dabei erfolgt die Herstellung der im wesentlichen absorptionsfreien Metalloxid- oder Metallmischoxidschicht, wenn diese zur Einstellung des Farbtons erforderlich ist, besonders vorteilhaft durch die reaktive Magnetron-Kathodenzerstäubung unter Verwendung von Metall- oder Metalllegierungstargets in einer sauerstoffhaltigen Atmosphäre.

Die Abdunkelungsschicht wird ebenfalls durch Zerstäubung von metallischen Targets in einer sauerstoffhaltigen Atmosphäre aufgebracht, wobei jedoch nur soviel Sauerstoff zugesetzt wird, daß der metallische Charakter der Schicht noch erhalten bleibt. Alternativ oder zusätzlich können der Beschichtungsatmosphäre beispielsweise auch geringe Mengen an Stickstoff hinzugefügt werden, um den Lichtreflexionsgrad der metallischen Abdunkelungsschicht im gewünschten Ausmaß zu reduzieren. Andere Nichtmetalle können je nach Art des Nichtmetalls ebenfalls der Beschichtungsatmosphäre zugesetzt oder dem Metalltarget beigemischt werden.

Es hat sich gezeigt, daß das erfindungsgemäße Schichtsystem besonders geeignet ist, um in Verbindung mit der Magnetron-Kathodenzerstäubung in Durchlaufanlagen farblich unterschiedlich angepaßte Fassadenplatten in wirtschaftlicher Weise herzustellen. Durch die zuvor beschriebenen Maßnahmen kann man eine umfangreiche Produktpalette mit vielfältigen Nuancierungen in der Farbe und dem Lichtreflexionsgrad herstellen, ohne daß die Targetmaterialien gewechselt werden müssen. Letzteres ist bekanntlich bei Vakuum-Beschichtungsanlagen mit einem erheblichen Aufwand verbunden, weil für einen Targetwechsel die Anlage belüftet werden muß und das Wiedererreichen der für die Beschichtung erforderlichen Vakuum-Bedingungen einen erheblichen Zeitaufwand erfordert.

Als Ausgangsmaterial für die Herstellung der äußeren Schicht hat sich vor allem Chrom als besonders geeignet erwiesen. Für die Herstellung der Metalloxid-Schicht sind insbesondere Schichten aus $SnO_2$, $ZnO$, $In_2O_3$, $TiO_2$ oder deren Mischoxide geeignet, die sich besonders wirtschaftlich durch reaktive Magnetron-Kathodenzerstäubung herstellen lassen und die zusammen mit der mit einem Nichtmetall-Zusatz, insbesondere Sauerstoff, versehenen metallischen Abdunkelungsschicht über eine für die Anwendung als rückseitige Beschichtung einer Fassadenplatte ausreichende Korrosionsbeständigkeit verfügen.

Auf die vorzugsweise mittels der wirtschaftlichen Magnetron-Kathodenzerstäubung aufgebrachte erfindungsgemäße Beschichtung braucht wegen der optischen Dichtheit der äußeren Schicht keine zusätzliche Abdunkelungsschicht, z.B. in Form eines Farblackes oder einer aufgeklebten, dunkel eingefärbten Folie, aufgebracht zu werden. Auch kann insbesondere bei Anwendung eines Sauerstoffzusatzes wegen der vorzüglichen Schichthaftung zwischen der mit Sauerstoff angereicherten metallischen Abdunkelungsschicht und der Metalloxidschicht auf zusätzliche, den Beschichtungsaufwand erhöhende Haftschichten verzichtet werden.

In Einzelfällen kann sogar auf die farbgebende Metalloxidschicht verzichtet werden, wenn im Fensterbereich relativ neutral reflektierende Glasscheiben vorhanden sind und lediglich eine Anpassung des Lichtreflexionsgrads der an sich ebenfalls relativ neutral reflektierenden Abdunkelungsschicht durch entsprechende Bemessung des erfindungsgemäßen Nichtmetallzusatzes, insbesondere der Sauerstoffbeimischung, erfolgen muß. Auch ohne die Metalloxidschicht haftet dabei eine mit Sauerstoff angereicherte metallische Abdunkelungsschicht im Unterschied zu reinen Metallschichten ausgezeichnet auf Glas und ist die Fassadenplatte hinreichend korrosionsbeständig.

Es liegt allerdings im Rahmen der Erfindung, die mit der erfindungsgemäßen Beschichtung versehene Rückseite der Glasscheibe beispielsweise zum Schutz vor Beschädigungen beim Transport oder beim Einbau zusätzlich mit einer organischen oder anorganischen Schutzschicht oder einer Schutzfolie abzudecken. Außerdem kann die rückseitig beschichtete Fassadenplatte gegebenenfalls mit einer weiteren Scheibe aus Glas, Metall, Kunststoff oder dergleichen zu einem Laminat verbunden werden, wenn dies aus Sicherheitsgründen, zur Verbesserung der Wärmedämmung usw. gewünscht wird.

Die Beschichtung hat auch ohne eine zusätzliche Schutzabdeckung langzeitig eine ausreichende Beständigkeit gegenüber der Einwirkung der Atmosphäre, wobei insbesondere die Feuchtigkeitsbeständigkeit von großer Bedeutung ist, weil sich auf der Rückseite von Glasfassadenplatten häufig Wasserkondensat abscheidet. Die Feuchtebeständigkeit des Glasträgers wird durch die metallische Abdunkelungsschicht mit ihrem erfindungsgemäßen Gehalt an Sauerstoff und dergleichen sogar noch verbessert. Dieses Ergebnis ist für den Fachmann gänzlich unerwartet, weil durch reaktive Magnetron-Kathodenzerstäubung hergestellte Metalloxidschichten an und für sich keineswegs über die für offenliegende Beschichtungen erforderliche Feuchtraumbeständigkeit verfügen. Setzt man z. B. $SnO_2$-Schichten einem Feuchtraumtest bei 40 °C und 100 % relativer Luftfeuchtigkeit aus, so zeigt sich bereits nach etwa 60 Stunden beginnende Korrosion. Nach 150 Stunden hat sich die Beschichtung großflächig abgelöst. Ein entsprechender Test bei 70 °C führt bereits nach 60 Stunden Einwirkungszeit zu großflächigen Schichtablösungen. Ein ähnliches Verhalten zeigen auch andere Metalloxidschichten.

Bei dem erfindungsgemäßen Schichtsystem ergibt sich demgegenüber eine ganz erhebliche Verbesserung der Feuchtraumbeständigkeit. So konnten bei einer mit Sauerstoff angereicherten Chromschicht nach 2000 Stunden bei 70 °C und 100 % relativer Luftfeuchtigkeit noch keine Schichtveränderungen festgestellt werden. Diese hohe Korrosionsbeständigkeit ist überraschend; denn man wird erwarten, daß zumindest über die immer vorhandenen "pinholes" in der mit Sauerstoff oder anderen Nichtmetallen angereicherten Metall- oder Metallegierungsschicht Feuchtigkeit eindiffundiert und die darunterliegende feuchtigkeitsempfindliche Metalloxidschicht angegriffen und selbst auch an der Grenzfläche zum Glasträger unterwandert wird, so daß es in diesen Bereichen zu Schichtablösungen kommt. Die hohe Korrosionsbeständigkeit der Beschichtung ist insbesondere auch deswegen überraschend, weil unter den genannten Testbedingungen das für solche Anwendungen normalerweise als Glasträger eingesetzte Natron-Kalk-Silikatglas selbst nicht mehr ausreichend korrosionsbeständig ist. So zeigt sich bei 70 °C und 100 % relativer Luftfeuchtigkeit bereits beginnende Oberflächenkorrosion des unbeschichteten Glases nach 200 Stunden Einwirkungszeit.

Durch die erfindungsgemäße Beschichtung wird also die Korrosionsbeständigkeit des Glasträgers um mehr als eine Zehnerpotenz verbessert. Das ist ein sehr wichtiges Kriterium für den Einsatz solcher Fassadenplatten, insbesondere dann, wenn sich zwischen der Fassadenplatte und dem dahinterliegenden Isolationsmaterial ein Luftzwischenraum befindet, der nur schwach belüftet ist. Unter solchen Bedingungen reicht selbst die Korrosionsbeständigkeit von üblichem Natron-Kalk-Silikatglas nicht aus, um langfristig eine Korrosion der Glasoberfläche zu verhindern.

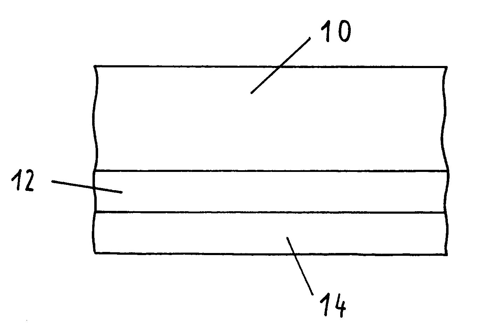

Nachstehend ist die Erfindung anhand von Ausführungsbeispielen unter Bezugnahme auf die schematische Zeichnung im einzelnen erläutert. Dabei zeigt die aus einer einzigen Figur bestehende Zeichnung ein Ausführungsbeispiel einer Fassadenplatte nach der Erfindung im Schnitt senkrecht zur Scheibenebene.

Wie die Zeichnung erkennen läßt, besteht die Fassadenplatte nach der Erfindung aus einem transparenten Glasträger **10** aus Natron-Kalk-Silikatglas, einer darauf vorzugsweise durch reaktive Magnetron-Kathodenzerstäubung aufgebrachten Metalloxidschicht **12** und einer darauf folgenden äußeren Abdunkelungsschicht **14** aus einem mit einem Nichtmetall, vorzugsweise mit Sauerstoff, angereicherten Metall oder einer Metallegierung. Bei dem gezeigten Ausführungsbeispiel wird die Metalloxidschicht **12** von einer maximal etwa 150 nm dicken $SnO_2$-Schicht und die äußere Abdunkelungsschicht **14** von einer mit Sauerstoff angereicherten Chromschicht gebildet. Auch die äußere Schicht **14** wurde mittels Magnetron-Kathodenzerstäubung, und zwar in einer Argon-Sauerstoff-Atmosphäre, hergestellt.

Beim Aufbau einer Glasfassade wird die in der Zeichnung schematisch dargestellte Fassadenplatte so angeordnet, daß die den Schichten **12**, **14** abgewandte Vorderseite des Glasträgers **10** der Atmosphäre und die Abdunkelungsschicht **14** dem Gebäudeinneren oder der Gebäudeaußenwand zugewandt ist.

Die Herstellung der erfindungsgemäßen Fassadenplatte wird in den folgenden Ausführungsbeispielen erläutert.

Beispiel I

In einer Vakuum-Beschichtungsanlage, die mit Beschichtungseinrichtungen für die Magnetron-Kathodenzerstäubung ausgerüstet war, wurden auf eine Floatglasscheibe aus Natron-Kalk-Silikatglas von 8 mm Dicke im Format 50 cm x 100 cm nacheinander folgende Schichten aufgebracht:
- eine $SnO_2$-Schicht in einer Dicke von 66 nm durch reaktive Zerstäubung eines Zinntargets in einer Argon-Sauerstoff-Atmosphäre bei einem Druck von $3.5 \cdot 10^{-1}$ Pa;

- eine mit Sauerstoff angereicherte Abdunkelungsschicht aus Chrom durch Zerstäubung eines Chromtargets in einer Argon-Sauerstoff-Atmosphäre von $1.3 \cdot 10^{-1}$ Pa, wobei die Dicke der Schicht und ihr Sauerstoffgehalt so eingestellt wurden, daß die Lichtdurchlässigkeit einer mit dieser Schicht versehenen Floatglasscheibe von zuvor 88 % auf etwa 1 % reduziert und gleichzeitig ein Lichtreflexionsgrad, gemessen von der Glasvorderseite, von etwa 30 % erreicht wurde.

Der Imaginärteil k des komplexen Brechungsindex n - i•k der Abdunkelungsschicht betrug 2.4 und lag damit etwa 40 % unterhalb des Wertes für reines Chrom. Die mit beiden Schichten versehene Glasscheibe wies bei Betrachtung von der unbeschichteten Vorderseite einen Lichtreflexionsgrad von 16.3 % auf. Sie war ohne erkennbaren Farbstich. Die Farborte in Reflexion, gemessen im L, a, b-Farbsystem (nach R. S. Hunter, Photoelectric Color Difference Meter, in J. Opt. Soc. Am. 48 (1958), S.985-955), lagen bei a = -1.0 und b = -4.4.

In der Außenansicht stimmte die Scheibe hinsichtlich Reflexionsgrad und Farbton sehr gut mit einer Isolierglasscheibe aus zwei 6 mm dicken, klaren Floatglasscheiben überein, bei welcher als Sonnenschutzbeschichtung auf der dem Scheibenzwischenraum zugewandten Oberfläche der Außenscheibe ein Interferenzschichtsystem mit Silber als Funktionsschicht aufgebracht war. Diese Scheibe hatte eine Lichtdurchlässigkeit von 51 %. Der Lichtreflexionsgrad betrug 16 % und die Farborte in Reflexion dieser Isolierglasscheibe lagen bei a = -1.0 und b = -4.7.

Beispiel II

In der Vakuum-Beschichtungsanlage aus dem vorhergehenden Beispiel wurde auf eine Floatglasscheibe aus Natron-Kalk-Silikatglas von 8 mm Dicke im Format 50 cm x 100 cm folgende Schicht aufgebracht:
- eine mit Sauerstoff angereicherte Abdunkelungsschicht aus einer Nickel-Chrom-Legierung durch Zerstäubung eines Ni 80 / Cr 20-Targets in einer Argon-Sauerstoff-Atmosphäre von $1.3 \cdot 10^{-1}$ Pa, wobei die Dicke der Schicht und ihr Sauerstoffgehalt so eingestellt wurden, daß die Lichtdurchlässigkeit einer mit dieser Schicht versehenen klaren Floatglasscheibe von zuvor 88 % auf etwa 1 % reduziert und ein Lichtreflexionsgrad , gemessen von der Glasvorderseite, von 22 % erreicht wurde.

Der Imaginärteil k des komplexen Brechungsindex n - i•k der Abdunkelungsschicht betrug 1.6 und lag damit etwa 60 % unterhalb des Wertes für reines Chrom. Die beschichtete Scheibe wies bei Betrachtung von der Glasvorderseite einen Lichtreflexionsgrad von 22 % auf. Ihre Außenansicht war fast neutral mit einem leichten Farbstich in Richtung grün. Die Farborte in Reflexion, gemessen im L, a, b-Farbsystem, lagen bei a = -2.5 und b = -0.2.

In der Außenansicht stimmte die Scheibe im Reflexionsgrad und im Farbton sehr gut mit einer Isolierglasscheibe aus zwei klaren 6 mm dicken Floatglasscheiben überein, bei welcher als Sonnenschutzbeschichtung auf der dem Scheibenzwischenraum zugewandten Oberfläche der Außenscheibe eine teildurchlässige, in sauerstofffreier Atmosphäre hergestellte Chromschicht aufgebracht war. Diese Isolierglasscheibe hatte eine Lichtdurchlässigkeit von 18 %. Ihr Lichtreflexionsgrad betrug 22 % und die Farborte in Reflexion lagen bei a = -3.0 und b = -0.5.

**Bezugszeichenliste**

    10:     Glasträger
    12:     Metalloxidschicht
    14:     Metallische Abdunkelungsschicht mit Nichtmetall-, insbesondere Sauerstoffzusatz

**Patentansprüche**

1. Fassadenplatte, insbesondere zum Verkleiden der Fassade zwischen mit Glasscheiben ausgestatteten Fensteröffnungen eines Gebäudes, mit einem transparenten Glasträger (10), der auf seiner Rückseite eine die Außenansicht der Fassadenplatte hinsichtlich Lichtreflexionsgrad und Farbton an diejenige der Glasscheiben im Fensterbereich anpassende Beschichtung mit einer Metalloxidschicht (12) mit einem Brechungsindex zwischen 1.8 und 2.5 sowie einer Dicke von 0 - 150 nm und darauf einer optisch dichten, gerichtet reflektierenden, metallischen Abdunkelungsschicht (14), die überwiegend aus Metallen aus der Gruppe Chrom, Titan, Nickel oder deren Legierungen, insbesondere Nickel-Chrom-Legierungen, oder Edelstahl besteht, aufweist,
        **dadurch gekennzeichnet, daß**
die metallische Abdunkelungsschicht (14) zur Reduzierung ihres Lichtreflexionsgrades mit einem Nichtmetallzusatz in einer solchen Menge versehen ist, daß der Lichtreflexionsgrad der durch ausreichende Dicke noch optisch dichten Abdunkelungsschicht (14) bei senkrechtem Lichteinfall, von der Vorderseite der Glasscheibe und ohne dazwischenliegende Metalloxidschicht (12) gemessen, zwischen 10 % und 35 % beträgt.

2. Fassadenplatte nach Anspruch 1, dadurch gekennzeichnet, daß der Nichtmetallzusatz zur metallischen Abdunkelungsschicht (14) so bemessen ist, daß der Imaginärteil k ihres komplexen Brechungsindex n - i•k um etwa 25 - 75 % unter demjenigen des für die Abdunkelungsschicht (14) verwendeten Metalls bzw. der Metalllegierung ohne den entsprechenden Zusatz liegt, mindestens aber etwa 1.0 beträgt.

3. Fassadenplatte nach Anspruch 1 oder 2, dadurch gekennzeichnet, daß der Mengenanteil des Nichtmetallzusatzes an der metallischen Abdunkelungsschicht (14) zwischen 3 und 30 % liegt.

4. Fassadenplatte nach Anspruch 3, dadurch gekennzeichnet, daß der Mengenanteil des Nichtmetallzusatzes an der metallischen Abdunkelungsschicht (14) zwischen 5 und 25 % liegt.

5. Fassadenplatte nach einem der vorangehenden Ansprüche, dadurch gekennzeichnet, daß die metallische Abdunkelungsschicht (14) als Metall im wesentlichen Chrom enthält.

6. Fassadenplatte nach einem der vorangehenden Ansprüche, dadurch gekennzeichnet, daß der Nichtmetallzusatz zur metallischen Abdunkelungsschicht (14) im wesentlichen aus Sauerstoff besteht.

7. Fassadenplatte nach Anspruch 6, dadurch gekennzeichnet, daß der Sauerstoffgehalt der metallischen Abdunkelungsschicht (14) maximal 30 %, bezogen auf den Sättigungsgehalt des verwendeten Metalls bzw. der Metallegierung, beträgt.

8. Fassadenplatte nach einem der vorangehenden Ansprüche, dadurch gekennzeichnet, daß die Dicke der metallischen Abdunkelungsschicht (14) zwischen 20 und 150 nm liegt.

9. Verfahren zum Herstellen einer Fassadenplatte nach einem der vorangehenden Ansprüche, dadurch gekennzeichnet, daß mindestens eine der Schichten (12, 14) mittels Vakuumbeschichtung auf den Glasträger (10) aufgebracht wird.

10. Verfahren nach Anspruch 9, dadurch gekennzeichnet, daß mindestens eine der beiden Schichten (12, 14) mittels Magnetron-Kathodenzerstäubung aufgebracht wird.

11. Verfahren nach Anspruch 10, dadurch gekennzeichnet, daß die Metalloxidschicht (12) durch reaktive Magnetron-Kathodenzerstäubung von metallischen Targets in sauerstoffhaltiger Atmosphäre aufgebracht wird.

12. Verfahren nach Anspruch 10 oder 11, dadurch gekennzeichnet, daß die metallische Abdunkelungsschicht (14) durch Magnetron-Kathodenzerstäubung von metallischen Targets in sauerstoffhaltiger Atmosphäre aufgebracht wird, wobei der Sauerstoffgehalt der Atmosphäre niedriger eingestellt wird, als er zum Aufbringen einer mit Sauerstoff gesättigten Oxidschicht mindestens erforderlich ist.

13. Verfahren nach Anspruch 12, dadurch gekennzeichnet, daß die Flußrate des der Beschichtungsatmosphäre zugesetzten Sauerstoffs mindestens 20 %, vorzugsweise mindestens 30 %, unterhalb derjenigen eingestellt wird, die zum Erreichen einer mit Sauerstoff gesättigten Oxidschicht erforderlich ist.

14. Verwendung einer Fassadenplatte nach einem der Ansprüche 1 bis 8 zur Verkleidung des lichtundurchlässigen Bereichs von Fassaden, die im Fensterbereich mit Glasscheiben mit einem Lichtreflexionsgrad von etwa 8 - 25 % ausgestattet sind.

**Claims**

1. Curtain wall panel, in particular for cladding the curtain wall between window openings of a building fitted with glass panes, with a transparent glass substrate (10), which is backed with a coating matched to the external appearance of the curtain wall panel in respect of light reflection factor and hue to those of the glass panes in the window area, this coating having a metal oxide layer (12) with a refractive index of between 1.8 and 2.5, a thickness of 0 - 150 nm and on it an optically dense, specular-reflection, metallic darkening layer (14) which consists predominantly of metals of the group chromium, titanium, nickel or alloys, in particular nickel-chromium alloys, or stainless steel,

    **characterized by the fact that:**

the metallic darkening layer (14), in order to reduce its light reflection factor, is provided with a non-metallic additive in a quantity such that the light reflection factor of the darkening layer (14), which is still optically dense by virtue of sufficient thickness, with perpendicular incidence of light, measured from the front of the glass pane and without intermediate metal oxide layer (12), is between 10 % and 35 %.

2. Curtain wall panel in accordance with Claim 1, characterized by the fact that the non-metallic additive to the metallic darkening layer (14) is dimensioned such that the imaginary parts k of its complex refractory index $n - i \cdot k$ is approximately 25 - 75 % below that of the metal or of the metal alloy without the corresponding additive used for the darkening layer (14), but is at least approximately 1.0.

3. Curtain wall panel in accordance with Claim 1 or 2, characterized by the fact that the quantitative proportion of the non-metallic additive in the metallic darkening layer (14) is between 3 and 30 %.

4. Curtain wall panel in accordance with Claim 3, characterized by the fact that the quantitative proportion of the non-metallic additive in the metallic darkening layer (14) is between 5 and 25 %.

5. Curtain wall panel in accordance with one of the foregoing Claims, characterized by the fact that the metallic darkening layer (14) essentially contains metal in the form of chromium.

6. Curtain wall panel in accordance with one of the foregoing Claims, characterized by the fact that the non-metallic additive to the metallic darkening layer (14) consists essentially of oxygen.

7. Curtain wall panel in accordance with Claim 6, characterized by the fact that the oxygen content of the metallic darkening layer (14) is a maximum of 30 % referred to the saturation content of the metal used or of the metal alloy.

8. Curtain wall panel in accordance with one of the foregoing Claims, characterized by the fact that the thickness of the metallic darkening layer (14) is between 20 and 150 nm.

9. Process for manufacture of a curtain wall panel in accordance with one of the foregoing Claims, characterized by the fact that at least one of the layers (12, 14) is applied to the glass substrate (10) by means of vacuum coating.

10. Process in accordance with Claim 9, characterized by the fact that at least one of the two layers (12, 14) is applied by means of magnetron cathode sputtering.

11. Process in accordance with Claim 10, characterized by the fact that the metal oxide layer (12) is applied by means of reactive magnetron cathode sputtering of metal targets in oxygenous atmosphere.

12. Process in accordance with, Claim 10 or 11, characterized by the fact that the metallic darkening layer (14) is applied by means of magnetron cathode sputtering of metallic targets in oxygenous atmosphere, where the oxygen content of the atmosphere is adjusted so as to be lower than is at least necessary for application of an oxide layer saturated with oxygen.

13. Process in accordance with Claim 12, characterized by the fact that the flow rate of the oxygen added to the coating atmosphere is set so as to be at least 20 %, preferably at least 30 % below that necessary for achieving an oxide layer saturated with oxygen.

14. Use of a curtain wall panel in accordance with one of e Claims 1 to 8 for cladding the opaque area of curtain walls which are fitted in the window area with glass panes with a light reflection factor of approximately 8 - 25 %.

**Revendications**

1. Panneau de façade en particulier pour habiller la façade entre les ouvertures d'un bâtiment équipées de vitres, comportant un support en verre transparent (10) présentant sur son dos un revêtement adaptant l'allure extérieure du panneau de façade quant à son degré de reflexion lumineuse et sa teinte à ceux des vitres située dans la zone des fenêtres, ledit revêtement étant une couche d'oxyde métallique (12) ayant un indice de réfraction compris entre 1.8 et 2.5 ainsi qu'une épaisseur comprise entre 0 et 150 nm et sur lequel est appliquée une couche obscurcissante métallique (14) optiquement imperméable, réfléchissante dans une direction donnée, se composant principalement des métaux du groupe chrome, titane, nickel ou de leurs alliages, en particulier des alliages au nickel-chrome, ou de l'acier inox,

   **caractérisé en ce que**

   la couche métallique obscurcissante (14) présente, pour abaisser son degré de réflexion de la lumière, un additif non métallique en une quantité telle que le degré de réflexion de la couche obscurcissante (14) optiquement encore imperméable du fait d'une épaisseur suffisante s'élève entre 10 et 35%, mesuré depuis le côté avant de la vitre et sans couche d'oxyde métallique intercalaire (12), lorsque les rayons lumineux tombent perpendiculairement dessus.

2. Panneau de façade selon revendication 1, caractérisé en ce que l'additif non métallique de la couche obscurcissante métallique (14) a été calculé de telle sorte que la partie imaginaire k de son indice de réfraction complexe n - i * k se situe entre 25 et 75% en-dessous de celui du métal ou de l'alliage métallique présent dans la couche obscurcissante ne contenant pas l'additif correspondant, mais s'élève au moins à 1.0 environ.

3. Panneau de façade selon la revendication 1 ou 2, caractérisé en ce que la part quantitative d'additif non métallique dans la couche obscurcissante métallique (14) est comprise entre 3 et 30%.

4. Panneau de façade selon la revendication 3, caractérisé en ce que la part quantitative d'additif non métallique dans la couche obscurcissante métallique (14) est comprise entre 5 et 25%.

5. Panneau de façade selon l'une des revendications précédentes, caractérisé en ce que la couche obscurcissante métallique (14) contient, comme métal, essentiellement du chrome.

6. Panneau de façade selon l'une des revendications précédentes, caractérisé en ce que l'additif non métallique entrant dans la couche obscurcissante métallique (14) est essentiellement de l'oxygène.

7. Panneau de façade selon la revendication 6, caractérisé en ce que la teneur en oxygène de la couche obscurcissante métallique (14) s'élève au maximum à 30% de la teneur de saturation du métal ou de l'alliage utilise.

8. Panneau de façade selon l'une des revendications précédentes, caractérisé en ce que l'épaisseur de la couche obscurcissante métallique (14) est comprise entre 20 et 150 nm.

9. Procédé de fabrication d'un panneau de façade selon l'une des revendications précédentes, caractérisé en ce qu'au moins l'une des couches (12, 14) est appliquée sur le support en verre (10) par application sous vide.

10. Procédé selon la revendication 9, caractérisé en ce qu'au moins l'une des deux couches (12, 14) est appliquée par pulvérisation cathodique à magnétron.

11. Procédé selon la revendication 10, caractérisé en ce que la couche d'oxyde métallique (12) est appliquée dans une atmosphère contenant de l'oxygène par pulvérisation, réactive cathodique au magnétron, sur des cibles métalliques.

12. Procédé selon la revendication 10 ou 11, caractérisé en ce que la couche obscurcissante métallique (14) est appliquée par pulvérisation cathodique au magnétron sur des cibles métalliques en atmosphère contenant de l'oxygène, la teneur en oxygène de cette atmosphère étant ajustée inférieure au minimum nécessaire pour appliquer une couche d'oxyde saturée d'oxygène.

13. Procédé selon la revendication 12, caractérisé en ce que le débit de l'oxygène rajouté à l'atmosphère régnant lors de l'application du revêtement est ajusté au minimum 20% ou de préférence au minimum 30% endessous de celui qui est nécessaire à l'obtention d'une couche d'oxyde saturée d'oxygène.

14. Utilisation d'un panneau de façade selon l'une des revendications 1 à 8 pour habiller la zone imperméable à la lumière de façades qui, dans la zone à fenêtres, sont équipées de vitres d'un degré de réflexion de la lumière compris entre 8 et 25% environ.